# EUROPEAN PATENT APPLICATION

(11) **EP 4 074 865 A1**
(43) Date of publication of application: **19.10.2022**
(21) Application number: 19955824.8
(22) Date of filing: 09.12.2019
(51) Int. Cl.: C25B 15/02, H02J 15/00, H02J 3/38

(54) **WATER ELECTROLYSIS SYSTEM AND WATER ELECTROLYSIS DEVICE**

(71) Applicant: FUJITSU LIMITED, Kawasaki-shi, Kanagawa 211-8588 (JP)
(72) Inventor: YONEZAWA, Yu, Kawasaki-shi Kanagawa 212-8510 (JP); NAKASHIMA, Yoshiyasu, Kawasaki-shi Kanagawa 212-8510 (JP)
(74) Representative: Hoffmann Eitle
(86) International application number: PCT/JP2019/048117
(87) International publication number: WO 2021/117097

(57) **Abstract**

A water electrolysis system includes a power generation device, a water electrolysis cell, and a power converter configured to generate an output voltage applied to the water electrolysis cell by converting power supplied from the power generation device, wherein the power converter limits fluctuations in the output voltage to a range equal to or greater than a threshold voltage of the water electrolysis cell such that the output voltage does not become less than the threshold voltage.

## Description

### [Technical Field]

The present disclosure relates to a water electrolysis system and a water electrolysis apparatus.

### [Background Art]

Conventionally, there has been known an electrolysis system including an electrolysis device that electrolyzes water and a switching regulator unit that steps down an output voltage V1 of a solar cell to a voltage V2 and outputs the voltage V2 to the electrolysis device. The switching regulator unit is used as a constant voltage power supply that suppresses fluctuations in the voltage V2 by feedback control based on the voltage V2 (see, for example, PTL 1).

### [Citation List]

### [Patent Literature]

[PTL 1] Japanese Laid-open Patent Publication No. 2015-164028

### [Summary of Invention]

### [Technical Problem]

Even when fluctuations in a voltage applied to an electrolysis device that electrolyzes water (hereinafter, also referred to as "water electrolysis cell") is suppressed by a constant voltage power supply, the voltage applied to the water electrolysis cell may fluctuate depending on behavior of power supplied from a power generation device such as a solar cell. For example, when the power supplied from the power generation device decreases sharply, the voltage applied to the water electrolysis cell may temporarily decrease sharply even when feedback is applied. Fluctuations in the voltage applied to the water electrolysis cell may be a factor that allows an excessive rush current to flow through the water electrolysis cell and causes deterioration of the water electrolysis cell.

The present disclosure provides a technology capable of suppressing a rush current flowing through a water electrolysis cell.

### [Solution to Problem]

The present disclosure provides a water electrolysis system that includes: a power generation device; a water electrolysis cell; and a power converter configured to generate an output voltage applied to the water electrolysis cell by converting power supplied from the power generation device, wherein the power converter limits fluctuations in the output voltage to a range equal to or greater than a threshold voltage of the water electrolysis cell such that the output voltage does not become less than the threshold voltage.

Furthermore, the present disclosure provides a water electrolysis apparatus that includes: a water electrolysis cell; and a power converter that generates an output voltage applied to the water electrolysis cell by converting input power, wherein the power converter limits fluctuations in the output voltage to a range equal to or greater than a threshold voltage of the water electrolysis cell such that the output voltage does not become less than the threshold voltage.

### [Advantageous Effects of Invention]

According to the technology of the present disclosure, a rush current flowing through a water electrolysis cell may be suppressed.

### [Brief Description of Drawings]

FIG. 1 is a diagram illustrating a structure example of a water electrolysis system in an embodiment;
FIG. 2 is a diagram illustrating a structural example of a water electrolysis cell;
FIG. 3 is a diagram illustrating an example of electrical characteristics of the water electrolysis cell;
FIG. 4 is a diagram exemplarily illustrating a rush current flowing through the water electrolysis cell;
FIG. 5 is a diagram illustrating an example of an equivalent circuit of the water electrolysis cell;
FIG. 6 is a diagram exemplarily illustrating a case where a voltage applied to the water electrolysis cell fluctuates;
FIG. 7 is a diagram illustrating a structure example of a water electrolysis system in a comparative mode;
FIG. 8 is a diagram exemplarily illustrating an operation waveform of the water electrolysis system in the comparative mode;
FIG. 9 is a diagram illustrating an example of static characteristics of a voltage and a current in the water electrolysis cell;
FIG. 10 is a diagram illustrating an example of dynamic characteristics of a voltage and a current in the water electrolysis cell;
FIG. 11 is a diagram illustrating a first structure example of a power converter;
FIG. 12 is a diagram illustrating a second structure example of the power converter;
FIG. 13 is a diagram illustrating a third structure example of the power converter;
FIG. 14 is a diagram exemplarily illustrating an operation waveform of the power converter;
FIG. 15 is a diagram illustrating an example of an operation waveform when fluctuations in an output voltage are not limited to a range equal to or greater than a threshold voltage of the water electrolysis cell;
FIG. 16 is a diagram illustrating an example of an operation waveform when fluctuations in the output voltage are limited to the range equal to or greater than the threshold voltage of the water electrolysis cell; and
FIG. 17 is a diagram illustrating a hardware structure example of a control unit.

### [Description of Embodiments]

Hereinafter, an embodiment of the present disclosure will be described.

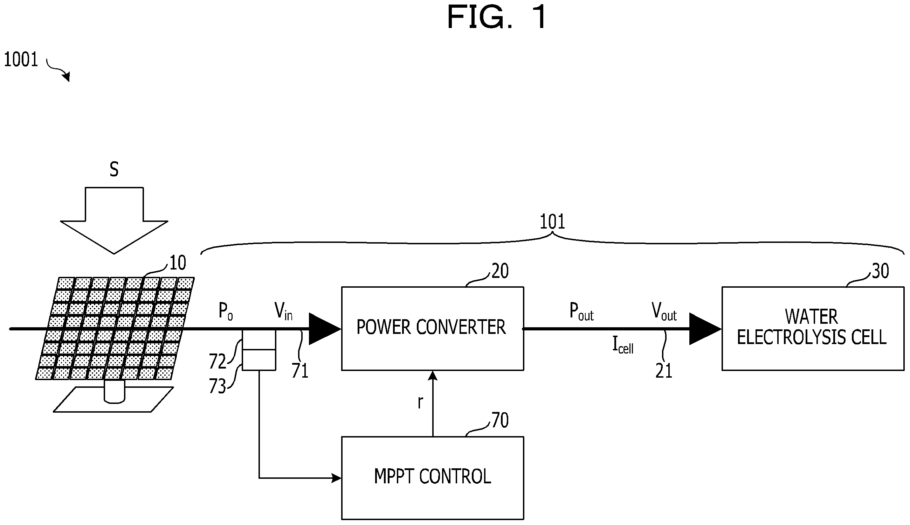

FIG. 1 is a diagram illustrating an example of a structure of a water electrolysis system in an embodiment. A water electrolysis system 1001 illustrated in FIG. 1 generates hydrogen by electrolyzing water with electric energy generated by a solar panel 10. The water electrolysis system 1001 controls power drawn from the solar panel 10 so that the maximum power is output from the solar panel 10. The water electrolysis system 1001 includes the solar panel 10 and a water electrolysis apparatus 101. The water electrolysis apparatus 101 includes a maximum power point tracking (MPPT) controller 70, a power converter 20, a cell 30, an ammeter 72, and a voltmeter 73.

The solar panel 10 is an example of a power generation device that outputs a generated first direct current power Pₒ, and includes a plurality of solar cells arranged on a panel surface. The solar cell uses a photovoltaic effect to convert light energy such as sunlight into direct current power and output the direct current power.

The solar cell has a current-voltage characteristic similar to that of a battery having a relatively large internal resistance, and a voltage drop occurs when a current is drawn. A maximum power point, which is determined by a current and voltage at which the maximum power may be drawn, changes depending on illuminance (solar radiation amount S) illuminating the solar cell and temperature of the solar cell. When the illuminance is high, a power generation amount increases, and thus the maximum power increases. On the other hand, when the temperature of the solar cell rises, an internal resistance increases, and the maximum power decreases.

A method of controlling power drawn from a solar cell so as to always satisfy a maximum power point is called maximum power point tracking (MPPT) control, and the control method called a hill-climbing method is often used. The MPPT control is an effective technology for using a solar cell with high efficiency. In the following, output power at the maximum power point of the solar panel 10 is referred to as maximum power Psolar_max.

The MPPT controller 70 generates a control command value for bringing the output power (first direct current power Pₒ) of the solar panel 10 calculated by the ammeter 72 and the voltmeter 73 installed on an output line 71 of the solar panel 10 close to the maximum power Psolar_max. The MPPT controller 70 illustrated in FIG. 1 generates a control command value r of the power converter 20, which is one of loads of the solar panel 10, by performing the MPPT control on the basis of the power (first direct current power Pₒ) supplied from the solar panel 10. A content instructed by the control command value r may be an instruction voltage value representing a target value of an output voltage Vₒᵤₜ of the power converter 20, or an instruction duty ratio representing a target value of a duty ratio for controlling the output voltage Vₒᵤₜ of the power converter 20.

The power converter 20 is a DC-DC converter (DC: Direct Current) that converts the first DC power Pₒ output from the solar panel 10 into a second DC power Pₒᵤₜ according to the control command value r supplied from the MPPT controller 70, and outputs the second DC power Pₒᵤₜ. The power converter 20 converts an input voltage Vᵢₙ from the solar panel 10 into the output voltage Vₒᵤₜ according to the control command value r supplied from the MPPT controller 70, and applies the output voltage Vₒᵤₜ to both ends of the cell 30 connected to an output path 21.

The cell 30 is an example of a water electrolysis cell. The cell 30 may be a single cell or a cell stack in which a plurality of cells is connected in series. In a case where the cell 30 is a cell stack, the output voltage Vₒᵤₜ is applied to the both ends of the cell 30, so that a voltage obtained by dividing the output voltage Vₒᵤₜ is applied to both ends (between an anode and a cathode) of each of a plurality of cells connected in series.

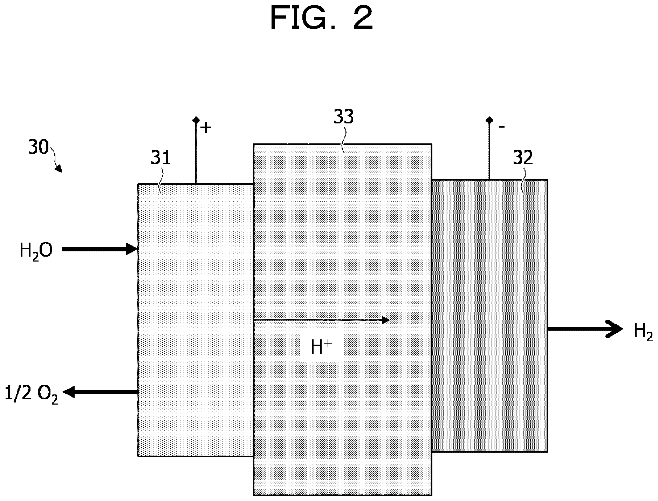

FIG. 2 is a diagram illustrating a structural example of the water electrolysis cell. The cell 30 illustrated in FIG. 2 represents a single cell, but in the case of a cell stack, the cell 30 represents one of a plurality of cells connected in series. The cell 30 is also referred to as an electrolytic bath. The cell 30 includes an anode 31, a cathode 32, and a diaphragm 33. The diaphragm 33 is sandwiched between the anode 31 and the cathode 32. Water (H₂O) supplied to the anode 31 is electrolyzed by a voltage applied between the anode 31 and the cathode 32. By this electrolysis, oxygen (O₂) is generated at the anode 31, hydrogen ions (H⁺) move from a side of the anode 31 through the diaphragm 33 to a side of the cathode 32, and hydrogen (H₂) is generated at the cathode 32. The oxygen generated at the anode 31 is released into the atmosphere or stored via an oxygen pipe. The hydrogen generated at the cathode 32 is stored in a hydrogen tank via a hydrogen pipe. The hydrogen stored in the hydrogen tank is used as energy.

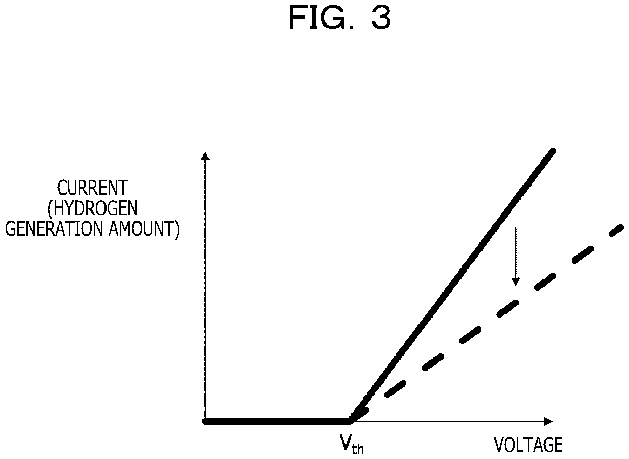

FIG. 3 is a diagram illustrating an example of electrical characteristics of the water electrolysis cell. The cell 30 has a current-voltage characteristic similar to that of a diode, and a current suddenly flows out from a threshold voltage Vₜₕ, and electrolysis starts. When the cell 30 is a cell stack in which N cells are connected in series, a threshold voltage of the entire N cells connected in series is N times a threshold voltage per cell (about 1 to 1.5 V). The greater a current flowing through the cell 30, the greater a hydrogen generation amount.

However, when an excessive rush current instantaneously flows through the cell 30, deterioration of the cell 30 (particularly, deterioration of an electrode such as the anode 31) progresses, and a resistance value of the cell 30 increases. When the resistance value of the cell 30 increases, even when the same voltage is applied to the cell 30, the current flowing through the cell 30 decreases, so that the hydrogen generation amount also decreases (see a broken line in FIG. 3).

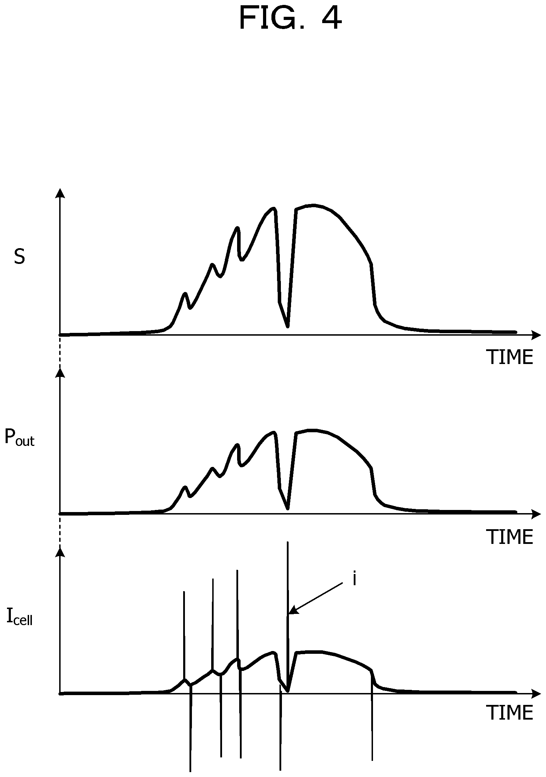

For example, as illustrated in FIG. 4, when the solar radiation amount S of the sun fluctuates, an excessive rush current i may be instantaneously generated in the current flowing through the cell 30 (cell current I_{cell}). Since the first direct current power Pₒ supplied from the solar panel 10 to the power converter 20 fluctuates as the solar radiation amount S fluctuates, when the solar radiation amount S fluctuates greatly, the second direct current power Pₒᵤₜ output from the power converter 20 may also fluctuate greatly. When the output voltage Vₒᵤₜ applied to the cell 30 fluctuates greatly with the fluctuations in the second direct current power Pₒᵤₜ, the rush current i synchronized with the fluctuations in the output voltage Vₒᵤₜ may instantaneously flow to the cell 30. One of factors that cause the rush current i synchronized with the fluctuations in the output voltage Vₒᵤₜ to instantaneously flow to the cell 30 is a capacitor component existing structurally in the cell 30.

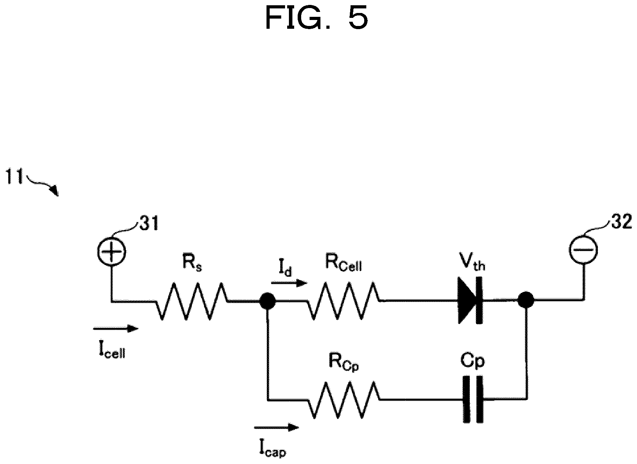

FIG. 5 is a diagram illustrating an example of an equivalent circuit of the water electrolysis cell. The cell 30 represented by an equivalent circuit 11 illustrated in FIG. 5 has a capacitor component Cp that is parasitic in parallel with resistance components between the anode 31 and the cathode 32. R_{S} represents a structural resistance component of the anode 31 and the cathode 32, R_{Cell} represents a resistance component of a portion sandwiched between a surface of the anode 31 and a surface of the cathode 32 via the diaphragm 33, and R_{Cp} represents a resistance component that exists in series with the capacitor component Cp. Vₜₕ represents the threshold voltage of the cell 30 (corresponding to a forward voltage in forward characteristics of a diode component). I_{d} represents a current flowing through the resistance component R_{Cell} and the diode component, I_{cap} represents a current flowing through the resistance component R_{Cp} and the capacitor component Cp, and I_{cell} (= I_{d} + I_{cap}) represents a total current flowing through the cell 30. The capacitor component Cp has a capacitance of several farads (F).

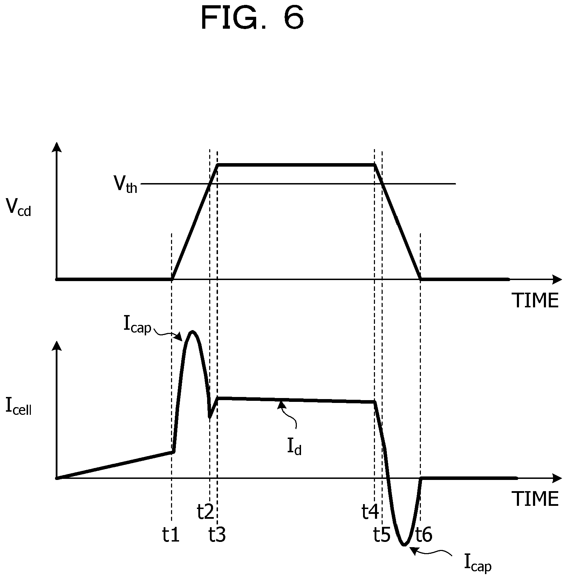

FIG. 6 is a diagram exemplarily illustrating a case where a voltage applied to the water electrolysis cell fluctuates. A cell voltage V_{cd} represents a voltage applied to the cell 30, and is substantially equal to the output voltage Vₒᵤₜ of the power converter 20. The cell current I_{cell} represents a current flowing through the cell 30, and is substantially equal to an output current Iₒᵤₜ of the power converter 20. The current I_{cap} (that is, the excessive rush current) that charges or discharges the capacitor component Cp instantaneously flows in synchronization with the fluctuations in the cell voltage V_{cd}.

During a period t1 to t2 when the cell voltage V_{cd} rises to the threshold voltage Vₜₕ, a current I_{d} does not flow, and the excessive current I_{cap} that charges the capacitor component Cp instantaneously flows to the capacitor component Cp. During a period t2 to t3 from when the cell voltage V_{cd} rises above the threshold voltage Vₜₕ to when the cell voltage V_{cd} reaches a constant value equal to or greater than the threshold voltage Vₜₕ, both the current I_{cap} and the current I_{d} flow. During a period t3 to t4 when the cell voltage V_{cd} is the constant value equal to or greater than the threshold voltage Vₜₕ, the current I_{cap} does not flow and the current I_{d} flows. During a period t4 to t5 until the cell voltage V_{cd} decreases to the threshold voltage Vₜₕ, both the current I_{cap} and the current I_{d} flow. During a period t5 to t6 when the cell voltage V_{cd} is lower than the threshold voltage Vₜₕ, the current I_{d} does not flow, and the excessive current I_{cap} that discharges the capacitor component Cp instantaneously flows to the capacitor component Cp.

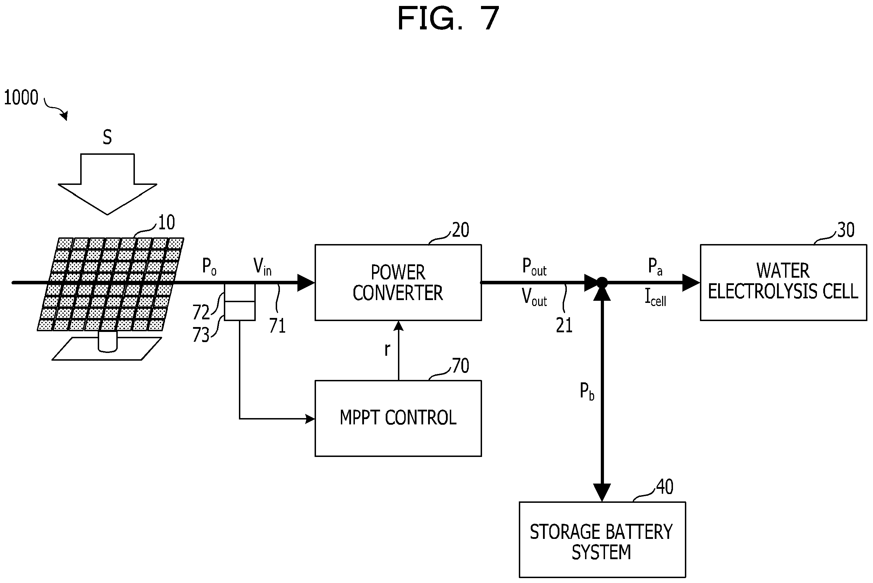

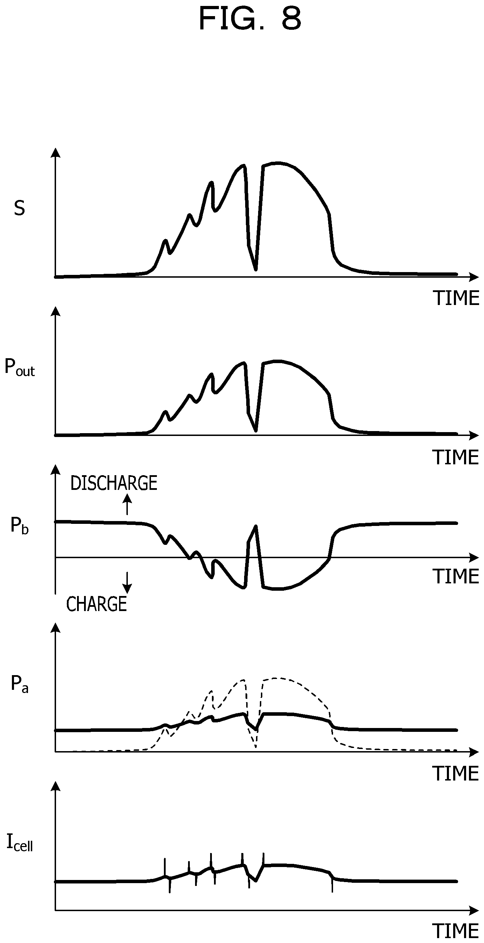

In order to suppress such a charge/discharge current (rush current), a mode in which a storage battery system 40 is provided in an output path 21 as in a water electrolysis system 1000 illustrated in FIG. 7 may be considered, for example. Fluctuations in power Pₐ supplied to a cell 30 are suppressed by power P_{b} charged and discharged in the storage battery system 40 (see FIG. 8). By suppressing fluctuations in the power Pₐ, fluctuations in the voltage applied to the cell 30 are also suppressed, so that rush current flowing through a capacitor component of the cell 30 may be suppressed. However, in such a mode in which the storage battery system 40 is provided, a new loss during charging and discharging of the storage battery system 40 may occur.

The power converter 20 in the embodiment of the present disclosure has a function of suppressing the rush current flowing through the capacitor component of the cell 30 regardless of presence or absence of such a storage battery system 40. Next, this function will be described.

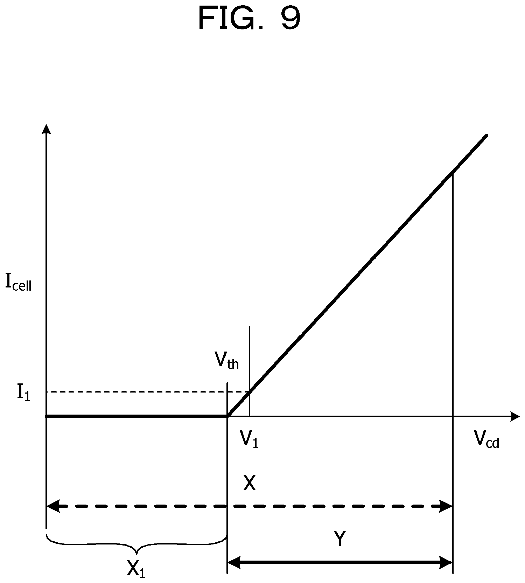

FIG. 9 is a diagram illustrating an example of static characteristics of a voltage and a current in the water electrolysis cell. The cell voltage V_{cd} represents the voltage applied to the cell 30, and is substantially equal to the output voltage Vₒᵤₜ of the power converter 20. The cell current I_{cell} represents the current flowing through the cell 30, and is substantially equal to the output current Iₒᵤₜ of the power converter 20.

The output voltage Vₒᵤₜ may freely change a range X as long as a range in which the output voltage Vₒᵤₜ (cell voltage V_{cd}) fluctuates is not limited. Thus, even when feedback control is performed to control the output voltage Vₒᵤₜ to a constant value, when the power P_{O} supplied from the solar panel 10 decreases sharply, the output voltage Vₒᵤₜ may temporarily decrease sharply to a range X₁ less than the threshold voltage Vₜₕ. When the output voltage Vₒᵤₜ (cell voltage V_{cd}) applied to the cell 30 fluctuates in the range X₁ less than the threshold voltage Vₜₕ, the rush current flows through the capacitor component Cp of the cell 30 (see FIGs. 5 and 6).

On the other hand, the power converter 20 in the embodiment of the present disclosure has a function of limiting fluctuations in the output voltage Vₒᵤₜ (cell voltage V_{cd}) to a range Y equal to or greater than the threshold voltage Vₜₕ so that the output voltage Vₒᵤₜ (cell voltage V_{cd}) does not become less than the threshold voltage Vₜₕ of the cell 30 (see FIG. 9). With such a limiting function, since the output voltage Vₒᵤₜ (cell voltage V_{cd}) may be controlled so as not to fluctuate in the range X₁ less than the threshold voltage Vₜₕ, the rush current flowing through the capacitor component Cp of the cell 30 may be suppressed, and deterioration of the cell 30 may be suppressed. When the output voltage Vₒᵤₜ always applied to the cell 30 is equal to or greater than the threshold voltage Vₜₕ, the rush current flowing through the capacitor component Cp of the cell 30 may always be suppressed. Of course, even with such a limiting function, there may be a period during which the output voltage Vₒᵤₜ becomes less than the threshold voltage Vₜₕ of the cell 30 (for example, a rising period of the output voltage Vₒᵤₜ when the power converter 20 is started, and a falling period of the output voltage Vₒᵤₜ when the power converter 20 is stopped).

An upper limit value of the range Y is not particularly limited, but it is preferable that the upper limit value of the range Y be appropriately set depending on the maximum application voltage allowed by the cell 30, and the like.

Note that, also in the embodiment of the present disclosure, a power storage unit such as the storage battery system 40 may be provided for smoothing the output voltage Vₒᵤₜ, or the like. However, by not providing such a power storage unit, it is possible to both reduce a loss during charging and discharging in the power storage unit and suppress the rush current flowing through the cell 30.

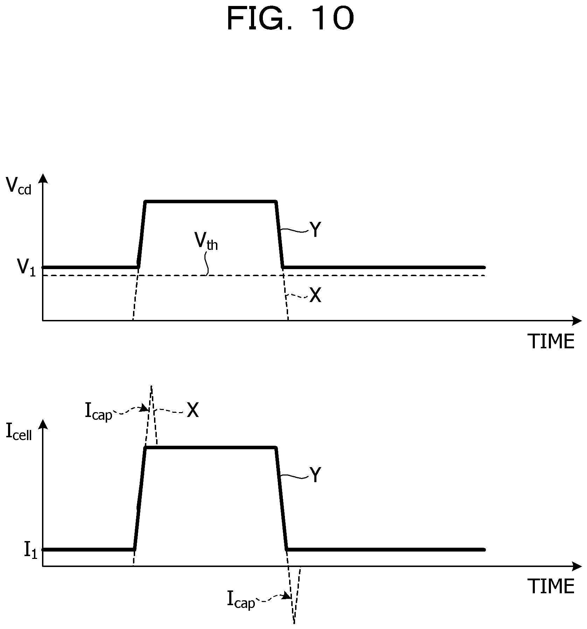

FIG. 10 is a diagram illustrating an example of dynamic characteristics of a voltage and a current in the water electrolysis cell. A solid line X indicates an example of an operation waveform in a case where fluctuations in the output voltage Vₒᵤₜ (cell voltage V_{cd}) are not limited to a range equal to or greater than the threshold voltage Vₜₕ. A broken line Y indicates an example of an operation waveform in a case where fluctuations in the output voltage Vₒᵤₜ (cell voltage V_{cd}) are limited to the range equal to or greater than the threshold voltage Vₜₕ.

The power converter 20 has a function of limiting fluctuations in the output voltage Vₒᵤₜ (cell voltage V_{cd}) to the range Y equal to or greater than the threshold voltage Vₜₕ so that the output voltage Vₒᵤₜ does not become less than the threshold voltage Vₜₕ by the control command value r. With this limiting function, it is possible to prevent the output voltage Vₒᵤₜ (cell voltage V_{cd}) from decreasing to less than the threshold voltage Vₜₕ even when an instruction voltage value Vᵣ of the output voltage Vₒᵤₜ instructed by the control command value r is less than the threshold voltage Vₜₕ, so that the rush current flowing through the capacitor component Cp of the cell 30 may be suppressed.

For example, the power converter 20 has a control function of bringing the output voltage Vₒᵤₜ close to a greater value between the instruction voltage value Vᵣ of the output voltage Vₒᵤₜ instructed by the control command value r and a set voltage value V₁ equal to or greater than the threshold voltage Vₜₕ. With this control function, it is possible to prevent the output voltage Vₒᵤₜ (cell voltage V_{cd}) from decreasing to less than the threshold voltage Vₜₕ even when the instruction voltage value Vᵣ of the output voltage Vₒᵤₜ instructed by the control command value r is less than the threshold voltage Vₜₕ, so that the rush current flowing through the capacitor component Cp of the cell 30 may be suppressed.

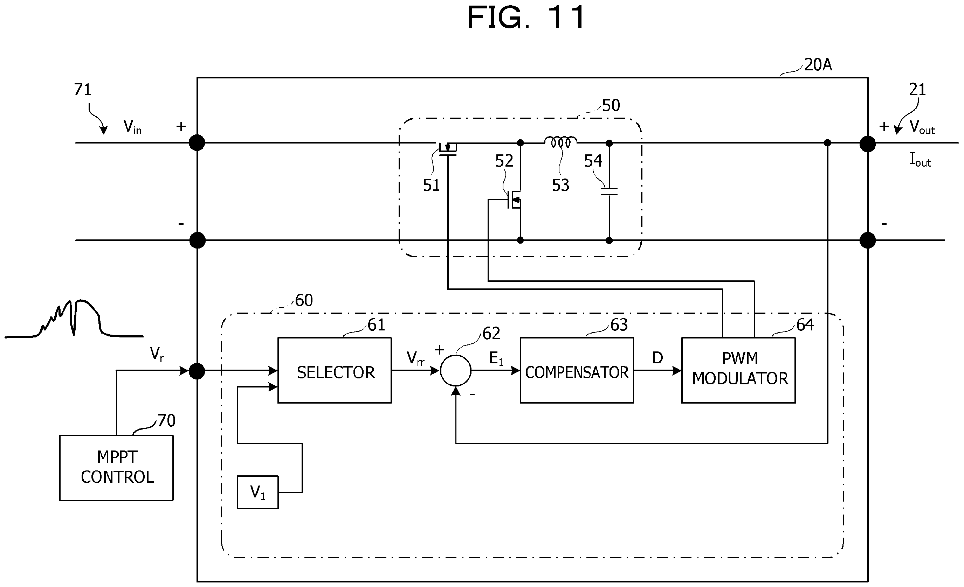

FIG. 11 is a diagram illustrating a first structure example of the power converter 20. A power converter 20A illustrated in FIG. 11 is an example of the power converter 20 described above, and includes a power supply circuit 50 and a control unit 60.

The power supply circuit 50 is a regulator that step-down converts the input voltage Vᵢₙ to the output voltage Vₒᵤₜ, but is not limited to the configuration illustrated in FIG. 11. The power supply circuit 50 illustrated in FIG. 11 is a known back-type conversion circuit including switching elements 51 and 52, an inductor 53, and a capacitor 54.

The control unit 60 controls a conversion operation of the power supply circuit 50. The control unit 60 controls the output voltage Vₒᵤₜ by controlling the conversion operation of the power supply circuit 50 so that a difference E₁ between a greater value Vᵣᵣ between the instruction voltage value Vᵣ and the set voltage value V₁ and a feedback value of the output voltage Vₒᵤₜ approaches zero. The control unit 60 includes a selector 61, a subtractor 62, a compensator 63, and a pulse width modulation (PWM) modulator 64.

The selector 61 selects a greater value between the instruction voltage value Vᵣ and the set voltage value Vi, and supplies the selected greater value Vᵣᵣ to the subtractor 62. The subtractor 62 derives the difference E₁ between the value Vᵣᵣ supplied from the selector 61 and the feedback value of the output voltage Vₒᵤₜ. The compensator 63 calculates a duty ratio D that brings the difference E₁ close to zero by proportion/integration control. The PWM modulator 64 complementarily switches the switching elements 51 and 52 on or off according to the duty ratio D.

According to the control unit 60, the power converter 20A may bring the output voltage Vₒᵤₜ close to a greater value between the instruction voltage value Vᵣ of the output voltage Vₒᵤₜ instructed by the control command value r and the set voltage value V₁ equal to or greater than the threshold voltage Vₜₕ. With this configuration, even when the instruction voltage value Vᵣ becomes less than the threshold voltage Vₜₕ, the output voltage Vₒᵤₜ is maintained at the set voltage value V₁ equal to or greater than the threshold voltage Vₜₕ, so that the rush current flowing through the cell 30 may be suppressed.

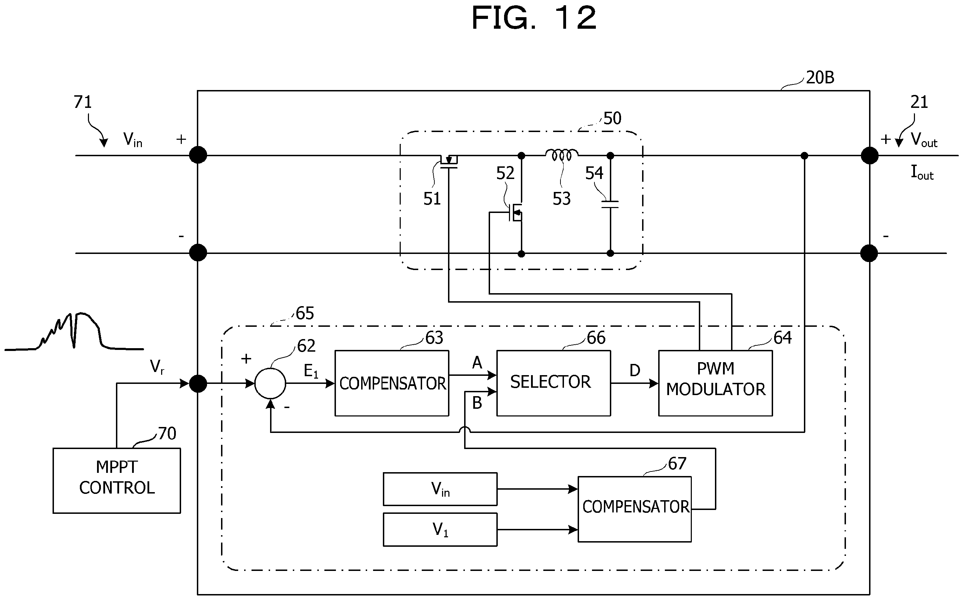

FIG. 12 is a diagram illustrating a second structure example of the power converter 20. A power converter 20B illustrated in FIG. 12 is an example of the power converter 20 described above, and includes a power supply circuit 50 and a control unit 65. The description of a point similar to that of the structure example described above will be omitted by consulting the description described above by reference.

The control unit 65 controls the output voltage Vₒᵤₜ according to a duty ratio that increases the output voltage Vₒᵤₜ between a duty ratio A that brings the output voltage Vₒᵤₜ close to the instruction voltage value Vᵣ and a duty ratio B that brings the output voltage Vₒᵤₜ close to the set voltage value V₁ equal to or greater than the threshold voltage Vₜₕ. The duty ratio A is an example of a first control value that brings the output voltage close to the instruction voltage value. The duty ratio B is an example of a second control value that brings the output voltage close to the set voltage value equal to or greater than the threshold voltage. The duty ratio D is an example of a control value that increases the output voltage between the first control value and the second control value.

The control unit 65 includes a subtractor 62, a compensator 63, a compensator 67, a selector 66, and a PWM modulator 64. The subtractor 62 calculates the difference E₁ between the instruction voltage value Vᵣ and the feedback value of the output voltage Vₒᵤₜ. The compensator 63 generates the duty ratio A according to the difference E₁, and derives the duty ratio A that brings the difference E₁ close to zero by proportion/integration control, for example. The compensator 67 uses a detection value of the input voltage Vᵢₙ and the set voltage value V₁ to generate the duty ratio B. For example, the compensator 67 calculates the duty ratio B (= Vᵢₙ/V₁) by dividing the detection value of the input voltage Vᵢₙ by the set voltage value V₁. The selector 66 selects a value that increases the output voltage Vₒᵤₜ between the duty ratio A and the duty ratio B, and supplies the selected value as the duty ratio D to the PWM modulator 64. The PWM modulator 64 complementarily switches the switching elements 51 and 52 on or off according to the duty ratio D.

According to the control unit 65, the power converter 20B may bring the output voltage Vₒᵤₜ close to a greater value between the instruction voltage value Vᵣ of the output voltage Vₒᵤₜ instructed by the control command value r and the set voltage value V₁ equal to or greater than the threshold voltage Vₜₕ. With this configuration, even when the instruction voltage value Vᵣ becomes less than the threshold voltage Vₜₕ, the output voltage Vₒᵤₜ is maintained at the set voltage value V₁ equal to or greater than the threshold voltage Vₜₕ, so that the rush current flowing through the cell 30 may be suppressed.

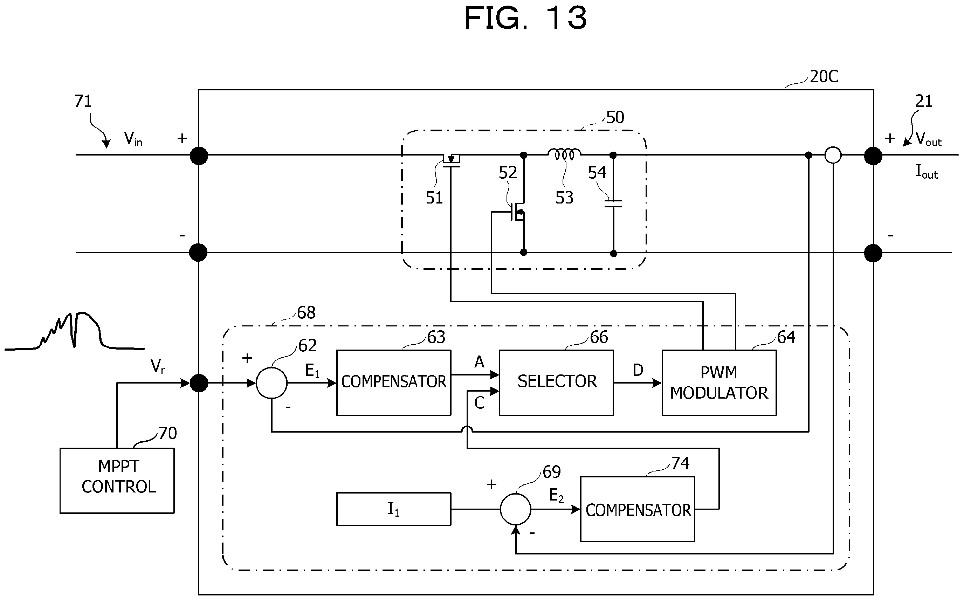

FIG. 13 is a diagram illustrating a third structure example of the power converter 20. A power converter 20C illustrated in FIG. 13 is an example of the power converter 20 described above, and includes a power supply circuit 50 and a control unit 68. The description of a point similar to that of the structure example described above will be omitted by consulting the description described above by reference.

The control unit 68 controls the output voltage Vₒᵤₜ according to a duty ratio that increases the output voltage Vₒᵤₜ between the duty ratio A that brings the output voltage Vₒᵤₜ close to the instruction voltage value Vᵣ and the duty ratio C that brings the output current Iₒᵤₜ close to a set current value I₁. The set current value I₁ is preferably set to a value slightly greater than zero (see FIG. 9). The duty ratio A is an example of the first control value that brings the output voltage close to the instruction voltage value. The duty ratio C is an example of a third control value that brings the output current flowing through the cell close to the set current value greater than zero. The duty ratio D is an example of a control value that increases the output voltage between the first control value and the third control value.

The control unit 68 includes a subtractor 62, a compensator 63, a subtractor 69, compensator 74, a selector 66, and a PWM modulator 64. The subtractor 62 calculates the difference E₁ between the instruction voltage value Vᵣ and the feedback value of the output voltage Vₒᵤₜ. The compensator 63 generates the duty ratio A according to the difference E₁, and derives the duty ratio A that brings the difference E₁ close to zero by proportion/integration control, for example. The subtractor 69 calculates a difference E₂ between the set current value I₁ and a feedback value of the output current Iₒᵤₜ. The compensator 74 generates the duty ratio C according to the difference E₂, and derives the duty ratio C that brings the difference E₂ close to zero by proportion/integration control, for example. The selector 66 selects a value that increases the output voltage Vₒᵤₜ between the duty ratio A and the duty ratio C, and supplies the selected value as the duty ratio D to the PWM modulator 64. The PWM modulator 64 complementarily switches the switching elements 51 and 52 on or off according to the duty ratio D.

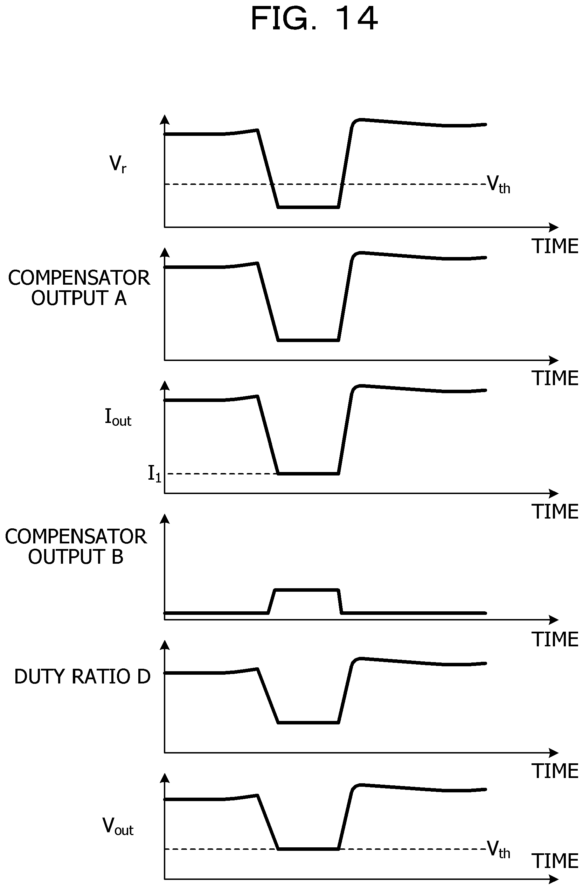

According to control unit 68, as illustrated in FIG. 14, even when the instruction voltage value Vᵣ becomes less than the threshold voltage Vₜₕ, the minimum output current Iₒᵤₜ of the set current value I₁ flows through the cell 30 by current feedback control (compensator 74). With this configuration, fluctuations in the output voltage Vₒᵤₜ may be limited to the range equal to or greater than the threshold voltage Vₜₕ, so that the rush current flowing through the cell 30 may be suppressed. Furthermore, even when the threshold voltage Vₜₕ changes due to the temperature or deterioration of the cell 30, since the minimum output current Iₒᵤₜ of the set current value I₁ flows through the cell 30, fluctuations in the output voltage Vₒᵤₜ may be limited to the range equal to or greater than the threshold voltage Vₜₕ.

The selector 61 (FIG. 11) may be added in a preceding stage of the subtractor 62 of the control unit 68 illustrated in FIG. 13. By the addition of the selector 61 to the control unit 68, even when the instruction voltage value Vᵣ becomes less than the threshold voltage Vₜₕ, the output voltage Vₒᵤₜ is maintained at the set voltage value V₁ equal to or greater than the threshold voltage Vₜₕ or a voltage value corresponding to the set current value I₁, so that the rush current flowing through the cell 30 may be suppressed.

The set voltage value V₁ in each structure example may change according to the temperature of the cell 30. With this structure, even when the threshold voltage Vₜₕ fluctuates according to the temperature of the cell 30, the set voltage value V₁ may be corrected. The set voltage value V₁ is preferably smaller when the temperature of the cell 30 is high than when the temperature of the cell 30 is low. With this configuration, even when the threshold voltage Vₜₕ decreases due to the temperature rise of the cell 30, the set voltage value V₁ may be corrected to a value slightly greater than the threshold voltage Vₜₕ.

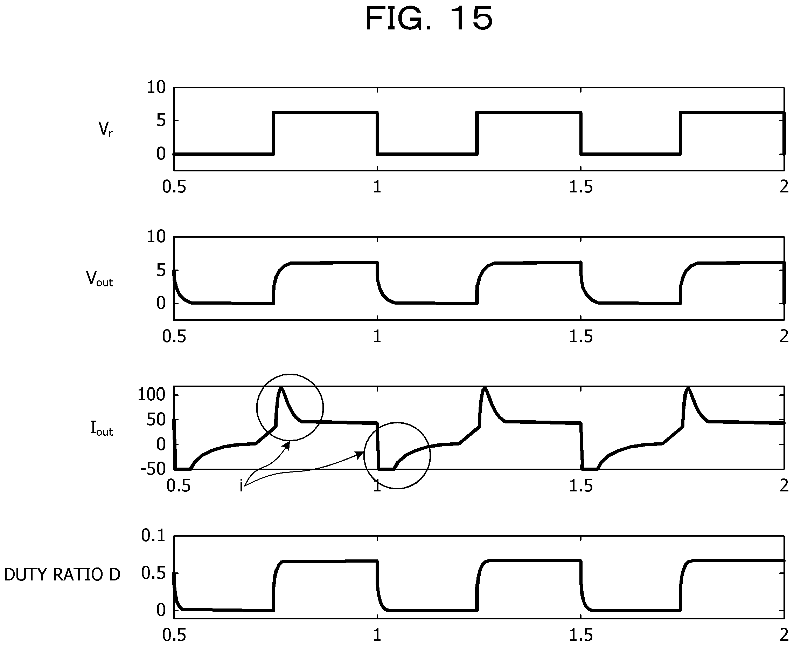

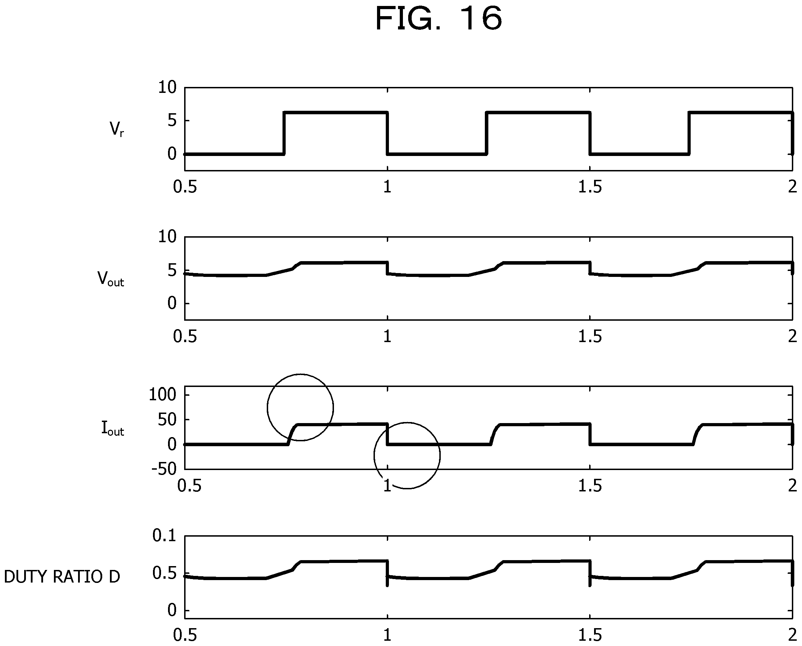

FIG. 15 is a diagram illustrating an example of an operation waveform when fluctuations in the output voltage are not limited to the range equal to or greater than the threshold voltage of the water electrolysis cell. FIG. 16 is a diagram illustrating an example of an operation waveform when fluctuations in the output voltage are limited to the range equal to or greater than the threshold voltage of the water electrolysis cell. Both FIGs. 15 and 16 illustrate operation confirmation results by simulation. It is assumed that simulation conditions are that the cell 30 is a cell stack in which three cells are connected in series, the threshold voltage Vₜₕ of the cell 30 is 4.5 volts, and the capacitor component Cp of the cell 30 is 1 farad. In FIG. 15, the rush current i is generated in synchronization with fluctuations in the output voltage Vₒᵤₜ, whereas in FIG. 16, the rush current i is suppressed.

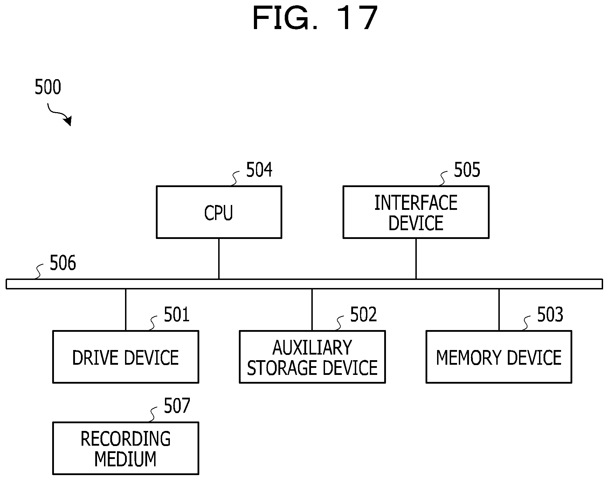

FIG. 17 is a diagram illustrating a hardware structure example of the control unit. All of the control units 60, 65, and 68 described above may be implemented only by an analog circuit, or may be implemented by a control device 500 as illustrated in FIG. 17. The control device 500 includes a drive device 501, an auxiliary storage device 502, a memory device 503, a central processing unit (CPU) 504, an interface device 505, and the like, which are connected to each other by a bus 506.

A program that implements processing in the control device 500 is provided by a recording medium 507. When the recording medium 507 recording the program is set in the drive device 501, the program is installed in the auxiliary storage device 502 from the recording medium 507 via the drive device 501. Note that the program does not have to be necessarily installed from the recording medium 507, and the program may be downloaded from another computer via a network. The auxiliary storage device 502 stores the installed program and also stores files, data, and the like that are needed.

The memory device 503 reads the program from the auxiliary storage device 502 and stores the program in a case where an instruction to start the program is given. The CPU 504 is a processor that executes a function related to the control device 500 according to the program stored in the memory device 503. The interface device 505 is used as an interface for connecting to the outside.

Note that, as an example of the recording medium 507, a portable recording medium such as a CD-ROM, a DVD disc, or a USB memory may be given. Furthermore, as an example of the auxiliary storage device 502, a hard disk drive (HDD), a flash memory, or the like may be given. Both the recording medium 507 and the auxiliary storage device 502 correspond to a computer-readable recording medium.

While the embodiment has been described thus far, the technology of the present disclosure is not limited to the embodiment described above. Various modifications and improvements such as combination and replacement with some or all of other embodiments are possible.

For example, the power generation device is not limited to a device that generates power by using sunlight, which is one type of renewable energy, and may be a device that generates power by using another type of renewable energy such as wind power.

### [Reference Signs List]

10 Solar panel
11 Equivalent circuit
20, 20A, 20B, 20C Power converter
21 Output path
30 Cell
31A node
32 Cathode
33 Diaphragm
40 Storage battery system
50 Power supply circuit
60, 65, 68 Control unit
70 MPPT controller
1000, 1001 Water electrolysis system

## Claims

1. A water electrolysis system comprising:
a power generation device;
a water electrolysis cell; and
a power converter configured to generate an output voltage applied to the water electrolysis cell by converting power supplied from the power generation device,
wherein the power converter limits fluctuations in the output voltage to a range equal to or greater than a threshold voltage of the water electrolysis cell such that the output voltage does not become less than the threshold voltage.

2. The water electrolysis system according to claim 1, further comprising:
a controller configured to generate a control command value of the power converter based on the power supplied from the power generation device,
wherein the power converter limits the fluctuations in the output voltage to the range such that the output voltage does not become less than the threshold voltage by the control command value.

3. The water electrolysis system according to claim 2, wherein the power converter brings the output voltage close to a greater value between an instruction voltage value of the output voltage instructed by the control command value and a set voltage value equal to or greater than the threshold voltage.

4. The water electrolysis system according to claim 3, wherein the power converter controls the output voltage such that a difference between the greater value between the instruction voltage value and the set voltage value and a feedback value of the output voltage approaches zero.

5. The water electrolysis system according to claim 3, wherein the power converter controls the output voltage according to a control value that increases the output voltage between a first control value that brings the output voltage close to the instruction voltage value and a second control value that brings the output voltage close to the set voltage value equal to or greater than the threshold voltage.

6. The water electrolysis system according to claim 5, wherein the first control value and the second control value are switching duty ratios of the power converter.

7. The water electrolysis system according to claim 6, wherein the power converter uses an input voltage from the power generation device to generate the duty ratio as the second control value.

8. The water electrolysis system according to claim 2, wherein the power converter controls the output voltage according to a control value that increases the output voltage between a first control value that brings the output voltage close to an instruction voltage value of the output voltage instructed by the control command value and a third control value that brings an output current that flows through the water electrolysis cell close to a set current value greater than zero.

9. The water electrolysis system according to claim 8, wherein the first control value and the third control value are switching duty ratios of the power converter.

10. The water electrolysis system according to claim 8 or 9, wherein the power converter generates the third control value according to a difference between the set current value and a feedback value of the output current.

11. The water electrolysis system according to any one of claims 5 to 10, wherein the power converter generates the first control value according to a difference between the instruction voltage value and a feedback value of the output voltage.

12. The water electrolysis system according to any one of claims 3 to 7, wherein the set voltage value changes according to temperature of the water electrolysis cell.

13. The water electrolysis system according to claim 12, wherein the set voltage value becomes smaller when the temperature is high than in a case where the temperature is low.

14. A water electrolysis apparatus comprising:
a water electrolysis cell; and
a power converter configured to generate an output voltage applied to the water electrolysis cell by converting power that is input,
wherein the power converter limits fluctuations in the output voltage to a range equal to or greater than a threshold voltage of the water electrolysis cell such that the output voltage does not become less than the threshold voltage.
